# EUROPÄISCHE PATENTANMELDUNG

(11) **EP 1 608 176 A1**
(43) Veröffentlichungstag der Anmeldung: **21.12.2005**
(21) Anmeldenummer: 05012781.0
(22) Anmeldetag: 14.06.2005
(51) Int. Cl.: H04N 7/16, H04L 12/28

(54) **Verfahren zum Übertragen von Daten in einem hybriden Netzwerk sowie hybrides Netzwerk**

(30) Priorität: 17.06.2004 DE 102004029330
(71) Anmelder: Vodafone Holding GmbH, 40213 Düsseldorf (DE)
(72) Erfinder: Rauch, Christian, Dipl.-Ing., 82418 Murnau (DE)
(74) Vertreter: Müller, Thomas

(57) **Zusammenfassung**

Es werden ein Verfahren zum Übertragen von Daten in einem hybriden Netzwerk (10) sowie ein hybrides Netzwerk beschrieben, aufweisend ein Broadcastnetzwerk mit wenigstens einem Broadcastkanal (11, 12, 13) zum Übertragen von Daten von der Anbieterseite (26) auf wenigstens eine Endeinrichtung auf der Nutzerseite (27), sowie ein Kommunikationsnetzwerk mit wenigstens einem Interaktionskanal (14, 15) zur Interaktion zwischen der Nutzerseite (27) und der Anbieterseite (26). Um zu gewährleisten, dass Daten einfach, ressourcenschonend, kosteneffizient und in einer für einen Nutzer attraktiven Weise auf eine diesem zugeordnete Endeinrichtung übertragen werden können, ist erfindungsgemäß vorgesehen, dass die Datenübertragung auf zwei oder mehr Übertragungsebenen (16, 17, 18) stattfindet, dass auf einer ersten Übertragungsebene (16) Broadcastdaten (19) über wenigstens einen Broadcastkanal (11) auf die Endeinrichtung(en) übertragen werden, dass zumindest temporär wenigstens eine interaktive Funktionalität, insbesondere eine Verlinkung (20) zu wenigstens einer weiteren Übertragungsebene (17; 18), vorgesehen ist, dass über eine Aktivierung der interaktiven Funktionalität eine Verzweigung von der ersten Übertragungsebene (16) in wenigstens eine weitere Übertragungsebene (17; 18) herbeigeführt wird und dass nach der Aktivierung der interaktiven Funktionalität über wenigstens einen Broadcastkanal (12; 13) und/oder wenigstens einen Interaktionskanal (14; 15) eine Datenübertragung auf der wenigstens einen weiteren Übertragungsebene (17; 18) stattfindet.

## Beschreibung

Die vorliegende Erfindung betrifft ein Verfahren zum Übertragen von Daten in einem hybriden Netzwerk gemäß dem Oberbegriff von Patentanspruch 1. Weiterhin betrifft die Erfindung ein hybrides Netzwerk gemäß dem Oberbegriff von Patentanspruch 21.

Hybride Netzwerke sind an sich bereits bekannt und bestehen in der Regel aus einem Broadcastnetzwerk mit wenigstens einem digitalen breitbandigen Vorwärtskanal, auch "Broadcastkanal" genannt. Über den Broadcastkanal werden Dateninhalte von der Anbieterseite auf die Nutzerseite übertragen. Weiterhin verfügen hybride Netzwerke auch über ein Kommunikationsnetzwerk mit wenigstens einem Interaktionskanal. Bei dem Interaktionskanal handelt es sich üblicherweise um einen Datenkanal, beispielsweise einen bidirektionalen Datenkanal, über den beispielsweise Interaktionen zwischen der Nutzerseite und der Anbieterseite stattfinden können.

Ein hybrides Netzwerk entsteht durch die Kombination wenigstens eines Vorwärtskanals mit wenigstens einem Datenkanal. Auf der Nutzerseite (Kundenseite) des hybriden Netzwerks ist dann jeweils eine geeignete Endeinrichtung erforderlich.

Ein für ein solches hybrides Netzwerk ausgelegtes System weist in der Regel wenigstens eine zentrale Rechnereinheit, beispielsweise eine Servereinrichtung, wenigstens eine Datenquelle, wenigstens eine Endeinrichtung, wenigstens einen unabhängigen Vorwärtskanal und wenigstens einen unabhängigen Datenkanal auf, wobei die zentrale(n) Rechnereinheit(en) und die Endeinrichtung(en) jeweils Schnittstellen zu dem Vorwärtskanal und dem Datenkanal aufweisen.

Hybride Netzwerke der genannten Art können für unterschiedlichste Anwendungen eingesetzt werden. Beispielsweise ist es bekannt, derartige Netzwerke im Zusammenhang mit der Übertragung von Informationsdaten, insbesondere von Informationsdaten in Form von Printmedieninhalten einzusetzen. Eine solche Lösung ist beispielsweise in der Veröffentlichung "Hybrid Mobile Interactive Services combining DVB-T and GPRS", erschienen in "Proceedings EMPCC 2001 (fourth european personal mobile communications conference)", Wien 19. - 22. Februar 2001 von C. Rauch et al. beschrieben. Diese Veröffentlichung beschreibt ein Verfahren sowie ein System zum elektronischen Übertragen von Informationsdaten in Form von Printmedieninhalten über ein hybrides Netzwerk, das wenigstens einen Vorwärtskanal (DVB-T) (Digital Video Broadcasting - Terrestrisch), wenigstens einen Interaktionskanal (GPRS) (General Packet Radio Service), wenigstens eine zentrale Rechnereinheit, die zumindest zeitweilig mit einer Datenquelle zusammenwirkt, und wenigstens eine einem Nutzer des Systems zugeordnete Endeinrichtung aufweist. Die digitalen Printmedieninhalte werden über den wenigstens einen Vorwärtskanal von der zentralen Rechnereinheit an die wenigstens eine Endeinrichtung übertragen. Weiterhin ist vorgesehen, daß die wenigstens eine Endeinrichtung über den wenigstens einen Interaktionskanal zumindest zeitweilig mit der zentralen Rechnereinheit interagieren kann.

Aus der WO 03/045064 A1 ist weiterhin eine Lösung bekannt, mittels derer Broadcastdaten auf eine Nutzer-Endeinrichtung übertragen werden. Die Auswahl und Einstellung der zu übertragenden, gewünschten Broadcastdaten erfolgt nutzerseitig über den Interaktionskanal. Die Parameter, die den Empfang sowie die Verwertung der übertragenen Broadcastdaten ermöglichen, werden von der Anbieterseite über den interaktionskanal auf die Nutzerseite übertragen. Die Übertragung der eigentlichen Broadcastdaten erfolgt in üblicher Weise über den Broadcastkanal.

Für beide bekannten Lösungen gilt, das in solchen Fällen, in denen die Übertragung der Broadcastdaten über den Broadcastkanal nicht vollständig oder aber fehlerbehaftet erfolgt, eine Vervollständigung der übertragenen Daten beziehungsweise eine Beseitigung von Übertragungsfehlern über den Interaktionskanal erfolgen kann. Die Abrechnung der angebotenen Dienste erfolgt in der Regel über den Interaktionskanal beziehungsweise das diesem zugrunde liegende Kommunikationsnetzwerk.

Bei der Übertragung von Broadcastdaten über ein Broadcastnetzwerk handelt es sich um einen gleichzeitigen Massenversand von Daten an eine große Anzahl von Nutzern. Die Übertragung erfolgt in der Regel nach dem Prinzip des "Streamings" oder "Downloads". Insbesondere der "Download" kann nach dem Prinzip eines "Datenkarussells" funktionieren. Die über den Broadcastkanal übertragenen Inhalte werden im Falle des "Streamings" in der Regel nach einem festen, vorgeplanten Zeitplan sequentiell übertragen. Im Falle des Download-Karussells werden die Datenübertragungen in regelmäßigen Zeitabständen wiederholt. Aus diesem Grund ist es schwierig, die über einen Broadcastkanal übertragenen Broadcastdaten für bestimmte Nutzer zu "personalisieren". Je nach Menge und Zeitintervall der übertragenen Broadcastdaten kann dies für einen Nutzer relativ lange Wartezeiten bedeuten, bis die von ihm gewünschten Inhalte erneut übertragen werden. Ebenso ist es schwierig, bei der Übertragung von Broadcastdaten auf bestimmte Nutzerwünsche einzugehen.

Bislang sind die Übertragungsverfahren "Streaming" und "Download" (individuell oder über ein Datenkarussell) jeweils über ein Rundfunk- oder Telekommunikationsnetz einzeln implementierbar. Eine maximal effiziente Kombination aller Techniken unter Berücksichtigung von Übertragungskosten/-ressourcen und Endnutzerbedürfnissen/zahlungsbereitschaft sind bisher nicht realisiert.

Die bekannten Lösungen können nur für einzelne Bedürfnisse und Zielgruppen optimiert werden, sind für andere Endnutzergruppen aber ineffizient. So eignet sich rein rundfunkbasiertes "Streaming" beispielsweise nur für viele Nutzer zur gleichen Zeit, rundfunkbasierter "Download" für eine mäßige Nutzerzahl, die innerhalb einer geringen Zeitspanne zu erreichen ist, und die Datenübertragung über einen Interaktionskanal - etwa in Form eines Telekommunikations- beziehungsweise Mobilfunkkanals - für wenige Nutzer und für beliebige, individuelle Zeitpunkte der Informationsbereitstellung.

Daraus resultieren jedoch Nachteile bezüglich der Kosten- und Ressourceneffizienz der elektronischen Übertragung sowie ein unzureichender Komfort für den Endnutzer bei der Bereitstellung der Nutzerdaten.

Ausgehend vom genannten Stand der Technik liegt der vorliegenden Erfindung die Aufgabe zugrunde, ein verbessertes Verfahren sowie ein verbessertes hybrides Netzwerk bereitzustellen, mit dem Daten einfach, ressourcenschonend, kosteneffizient und in einer für einen Nutzer attraktiven Weise auf eine diesem zugeordnete Endeinrichtung übertragen werden können.

Diese Aufgabe wird gelöst durch das Verfahren mit den Merkmalen gemäß dem unabhängigen Patentanspruch 1 sowie das hybride Netzwerk mit den Merkmalen gemäß dem unabhängigen Patentanspruch 21. Weitere Vorteile, Merkmale, Aspekte, Details und Effekte der Erfindung ergeben sich aus den Unteransprüchen, der Beschreibung sowie den Zeichnungen. Merkmale und Details, die im Zusammenhang mit dem erfindungsgemäßen Verfahren beschrieben sind, gelten dabei selbstverständlich auch im Zusammenhang mit dem erfindungsgemäßen hybriden Netzwerk, und umgekehrt.

Mittels der vorliegenden Erfindung wird es möglich, die vorstehend beschriebenen Übertragungsverfahren in einem hybriden Netzwerk im Hinblick auf eine maximale Kosten- und Ressourceneffizienz bei gleichzeitig maximalem Endnutzerkomfort zu kombinieren. Dabei wird zunächst die kosteneffiziente Eigenschaft des Broadcast, nämlich das Aussenden von Informationen an alle Teilnehmer, beibehalten. Diese Broadcast-Eigenschaft wird mit weiteren Übertragungsebenen des "Streaming" und/oder "Download" gekoppelt. Dennoch kann mit der vorliegenden Erfindung eine Flexibilität bei der Adressierung verschiedener Nutzerbedürfnisse und bei der Ausgestaltung verschiedener Dienste, erreicht werden.

Gemäß dem ersten Aspekt der Erfindung wird ein Verfahren zum Übertragen von Daten in einem hybriden Netzwerk bereitgestellt, wobei das hybride Netzwerk ein Broadcastnetzwerk mit wenigstens einem Broadcastkanal zum Übertragen von Daten von der Anbieterseite auf wenigstens eine Endeinrichtung auf der Nutzerseite, sowie ein Kommunikationsnetzwerk mit wenigstens einem Interaktionskanal zur Interaktion zwischen der Nutzerseite und der Anbieterseite aufweist. Das Verfahren ist erfindungsgemäß dadurch gekennzeichnet, dass die Datenübertragung auf zwei oder mehr Übertragungsebenen stattfindet, dass auf einer ersten Übertragungsebene Broadcastdaten über wenigstens einen Broadcastkanal auf die Endeinrichtung(en) übertragen werden, dass zumindest temporär wenigstens eine interaktive Funktionalität, insbesondere eine Verlinkung zu wenigstens einer weiteren Übertragungsebene, vorgesehen ist, dass über eine Aktivierung der interaktiven Funktionalität eine Verzweigung von der ersten Übertragungsebene in wenigstens eine weitere Übertragungsebene herbeigeführt wird und dass nach der Aktivierung der interaktiven Funktionalität über wenigstens einen Broadcastkanal und/oder wenigstens einen Interaktionskanal eine Datenübertragung auf der wenigstens einen weiteren Übertragungsebene stattfindet.

Das erfindungsgemäße Verfahren läuft in einem hybriden Netzwerk ab. Das hybride Netzwerk besteht zunächst aus einem Broadcastnetzwerk, das wiederum aus einem oder mehreren Broadcastkanälen besteht. Dabei ist die Erfindung nicht auf bestimmte Ausgestaltungsvarianten des Broadcatnetzwerks oder des wenigstens einen Broadcastkanals beschränkt. Einige nicht ausschließliche Beispiele hierzu werden im weiteren Verlauf der Beschreibung näher erläutert. Über wenigstens einen Broadcatskanal werden die Daten von der Anbieterseite (Netzbetreiberseite) auf wenigstens eine Endeinrichtung eines Nutzers (Dienstenutzer) übertragen. Das erfolgt vorzugsweise nach dem Prinzip des "Streamings".

Dabei ist die Erfindung nicht auf bestimmte Ausführungsformen in Bezug auf die Endeinrichtung beschränkt. Beispielsweise kann es sich um stationäre Endeinrichtungen, wie beispielsweise stationäre Rechner, TV-Geräte mit geeigneten Zusatzeinrichtungen und dergleichen handeln. Natürlich ist es auch denkbar, dass die Endeinrichtungen mobil ausgestaltet sind, beispielsweise in Form von transportablen Rechnern (Laptops und dergleichen), Mobiltelefonen, PDAs (Personal Digital Assistant), sogenannten "Webpads" und dergleichen. Dabei ist selbstverständlich, dass es sich bei der Nennung der Beispiele nicht um eine abschließende Aufzählung handelt.

Ein weiterer Teil des hybriden Netzwerks wird durch ein Kommunikationsnetzwerk gebildet, das wenigstens einen Interaktionskanal aufweist. Über diesen Interaktionskanal findet eine Interaktion zwischen Anbieter und Nutzer statt, wobei diese Interaktion unidirektional oder aber auch bidirektional ablaufen kann. Auch bezüglich des Kommunikationsnetzwerks ist die Erfindung nicht auf bestimmte Ausführungsformen beschränkt. Einige nicht ausschließliche Beispiele hierzu werden weiter untern beschrieben.

Erfindungsgemäß ist nunmehr vorgesehen, dass die Datenübertragung auf zwei oder mehr Übertragungsebenen stattfinden soll. Erfindungsgemäß sollen wenigstens zwei Übertragungsebenen vorgesehen sein. Eine maximale Anzahl von verschiedenen Übertragungsebenen ist nicht festgelegt. Diese ergibt sich vielmehr nach dem jeweiligen Einsatz- und Verwendungszweck des erfindungsgemäßen Verfahrens, beziehungsweise eines erfindungsgemäßen hybriden Netzwerks, welches weiter unter beschrieben wird. Durch die Nutzung mehrerer Übertragungsebenen wird nunmehr eine Funktionalität bereitgestellt, die die Übertragungsverfahren über zwei verschiedene Netzwerkarten innerhalb eines einzigen hybriden Netzwerks im Hinblick auf maximale Kosten- und Ressourceneffizienz bei gleichzeitig maximalem Endnutzerkomfort, kombiniert.

Auf einer ersten Ebene werden Broadcastdaten über wenigstens einen Broadcastkanal (von der Anbieterseite) auf die Endeinrichtung(en) (auf der Nutzzerseite) übertragen. Das kann vorteilhaft in der bisher bekannten Weise mittels "Streaming" erfolgen.

Zumindest temporär ist wenigstens eine interaktive Funktionalität vorgesehen. Dabei kann es sich insbesondere um eine Verlinkung zu wenigstens einer weiteren Übertragungsebene handeln. Dies kann beispielsweise mittels eine interaktiven Buttons oder dergleichen realisiert werden, wobei die Erfindung nicht auf bestimmte Ausgestaltungsformen für die interaktive Funktionalität beschränkt ist. Interaktiv soll in diesem Fall bedeuten, dass der Nutzer in die Lage versetzt wird, von sich aus zu agieren, sprich die Funktionalität in Gang zu setzen.

Beispielsweise kann die wenigstens eine interaktive Funktionalität zumindest temporär über den Broadcastkanal übertragen werden. Es ist auch denkbar, dass die interaktive Funktionalität zumindest temporär Bestandteil der in der ersten Übertragungsebene übertragenen Broadcastdaten ist. Allerdings ist die Erfindung nicht auf die beiden genannten Beispiele beschränkt. Beispielsweise kann nämlich auch vorgesehen sein, dass die die Verlinkung herbeiführende interaktive Funktionalität in der Endeinrichtung implementiert ist. So kann etwa vorgesehen sein, dass die interaktive Funktionalität fest in der Endeinrichtung - beispielsweise als Button oder dergleichen ― integriert ist. Natürlich ist es auch denkbar, dass die interaktive Funktionalität Bestandteil einer auf der Endeinrichtung befindlichen Klienten-Applikation ist. Die letztgenannte Ausführung hat den Vorteil, dass sich die interaktive Funktionalität nur dann auf der Endeinrichtung befindet, wenn der Nutzer die dazugehörige Applikation auch tatsächlich nutzt.

Über eine Aktivierung der interaktiven Funktionalität wird dann elektronisch und vorzugsweise automatisch eine Verzweigung von der ersten Übertragungsebene in wenigstens eine weitere Übertragungsebene herbeigeführt. Anschließend findet - nach der Aktivierung der interaktiven Funktionalität - in der wenigstens einen weiteren Übertragungsebene ― beispielsweise über wenigstens einen Broadcastkanal und/oder über wenigstens einen Interaktionskanal ― eine Datenübertragung statt. Wie dies im Einzelnen erfolgen kann, wird anhand nicht ausschließlicher Beispiele im Folgenden beschrieben.

Durch das erfindungsgemäße Verfahren werden verschiedene Übertragungsebenen kombiniert und miteinander verknüpft. Das bringt eine Reihe von Vorteilen mit sich, wie anhand eines konkreten Beispiels verdeutlicht wird. Dabei soll das Beispiel aus dem Bereich der Übertragung von TV-Inhalten lediglich dazu dienen, die generelle Funktionsweise des Verfahrens zu verdeutlichen. Es ist selbstverständlich, dass das Verfahren nicht auf dieses konkrete Einsatzfeld beschränkt ist. Mit dem erfindungsgemäßen Verfahren können nunmehr verschiedene Nutzerwünsche bedient werden. Beispielsweise gibt es passive Nutzer, die nur ein TV-Programm ansehen und konsumieren wollen. Diese werden nach wie vor über den Broadcastkanal der ersten Übertragungsebene bedient. Dann gibt es Nutzer, die aktiv an einem gesendeten TV-Inhalt teilnehmen wollen, beispielsweise indem Sie bezüglich der gesendeten TV-Inhalte interagieren wollen, etwa indem sie ihre Meinung dazu kundtun oder dergleichen. Über die Aktivierung der interaktiven Funktionalität könnte der Nutzer dann agieren. Schließlich gibt es auch solche Nutzer, die zu einem gesendeten TV-Inhalt möglichst rasch eine umfassende Möglichkeit der Interaktion haben möchten, indem sie beispielsweise möglicht viele Zusatzinformationen zu dem gesendeten TV-Inhalt erhalten und diese anschließend auf ihrer Endeinrichtung lokal abspeichern möchten. Auch dies ist mit dem erfindungsgemäßen Verfahren realisierbar, beispielsweise über ein Streaming von Broadcastdaten mit einer interaktiven Funktionalität, die bei Aktivierung eine Verzweigung in eine Übertragungsebene mit Downloadmöglichkeit zulässt.

Vorteilhaft kann über eine Aktivierung der wenigstens einen interaktiven Funktionalität eine Verzweigung von der ersten Übertragungsebene in eine zweite Übertragungsebene herbeigeführt werden, wobei nach der Aktivierung der wenigstens einen interaktiven Funktionalität über wenigstens einen Broadcastkanal und/oder wenigstens einen Interaktionskanal eine Datenübertragung auf der zweiten Übertragungsebene stattfindet.

Weiterhin kann vorgesehen sein, dass auch für die in der zweiten Übertragungsebene übertragenen Daten zumindest temporär wenigstens eine interaktive Funktionalität, insbesondere eine Verlinkung zu wenigstens einer weiteren Übertragungsebene, vorgesehen ist, dass über eine Aktivierung der wenigstens einen interaktiven Funktionalität eine Verzweigung von der zweiten Übertragungsebene in wenigstens eine weitere Übertragungsebene herbeigeführt wird und dass nach der Aktivierung der wenigstens einen interaktiven Funktionalität über wenigstens einen Broadcastkanal und/oder wenigstens einen Interaktionskanal eine Datenübertragung auf der wenigstens einen weiteren Übertragungsebene stattfindet.

Auch in diesem Fall kann die wenigstens eine interaktive Funktionalität beispielsweise zumindest temporär über einen Kanal der zweiten Übertragungsebene übertragen werden oder zumindest temporär Bestandteil von in der zweiten Übertragungsebene übertragenen Daten sein. Natürlich sind auch andere Ausgestaltungen denkbar, so dass bezüglich der hier beschriebenen interaktiven Funktionalität auf die Ausführungen zu der interaktiven Funktionalität weiter oben vollinhaltlich Bezug genommen und hiermit verwiesen wird.

Der Ablauf des Verfahrens erfolgt dabei in der wie oben beschriebenen Weise, wobei noch einmal betont wird, dass die Erfindung nicht auf eine bestimmte Anzahl von Übertragungsebenen beschränkt ist. Ebenso kann eine Verlinkung der unterschiedlichen Übertragungsebenen in jeder beliebigen Weise erfolgen. Es ist nicht unbedingt erforderlich, dass eine Verlinkung von einer Übertragungsebene nur zu einer benachbarten, direkt darunter oder darüber liegenden Übertragungsebene erfolgt. Vielmehr soll es möglich sein, dass von jeder Übertragungsebene eine Verlinkung zu jeder anderen Übertragungsebene realisiert werden kann, sofern dies gewünscht ist.

Nachfolgend wird eine vorteilhafte Ausgestaltung beschrieben. Dabei kann vorzugsweise vorgesehen sein, dass die Übertragung von Daten auf drei Übertragungsebenen stattfindet, dass auf der ersten Übertragungsebene Daten in Form von Broadcastdaten übertragen werden, dass zumindest temporär wenigstens eine interaktive Funktionalität, insbesondere eine Verlinkung in eine zweite Übertragungsebene, vorgesehen ist, dass auf der zweiten Übertragungsebene Daten in Form von Broadcastdaten und/oder in Form von zusätzlichen Informationsdaten übertragen werden, dass zumindest temporär wenigstens eine interaktive Funktionalität, insbesondere eine Verlinkung in eine dritte Übertragungsebene, vorgesehen ist und dass auf der dritten Übertragungsebene Daten in Form von Downloaddaten übertragen werden.

Bei dieser Ausführungsform des Verfahrens findet in der ersten Übertragungsebene eine Übertragung von Broadcastdaten vorzugsweise nach dem Prinzip des "Streamings" statt. In der darunter liegenden zweiten Übertragungsebene erfolgt eine Übertragung von Broadcastdaten und/oder eine Interaktion, so dass in dieser zweiten Übertragungsebene ein interaktives "Streaming" von Inhalten stattfinden kann. In der untersten, dritten Übertragungsebene findet dann ein Download von den vom Nutzer gewünschten Daten statt. Je nach Ausgestaltung können die Downloaddaten über wenigstens einen Broadcastkanal und/oder über wenigstens einen Interaktionskanal bereitgestellt werden.

Vorteilhaft kann über eine Aktivierung wenigstens einer interaktiven Funktionalität, insbesondere einer Verlinkung, eine Verzweigung von einer Übertragungsebene zur Übertragung von Broadcastdaten in wenigstens eine Übertragungsebene mit Möglichkeit zur Interaktion zwischen der Anbieterseite und der Nutzerseite herbeigeführt werden. In dieser Übertragungsebene muss der Nutzer nicht länger bloßer Konsument von angebotenen Daten bleiben. Vielmehr kann er im Hinblick auf die übertragenen Daten selbst aktiv werden, beispielsweise, indem er bezüglich der übertragenen Broadcastdaten weitergehende Informationen bestellt, einen Kommentar abgibt oder dergleichen. Dabei kann vorgesehen sein, dass in wenigstens einer der Übertragungsebenen Daten in Form von interaktiven Inhalten übertragen werden. Dies sind Daten, mit denen eine Interaktion ermöglicht wird, beziehungsweise die eine Interaktion ermöglichen. Weiterhin kann auch vorgesehen sein, dass in wenigstens einer der Übertragungsebenen Daten in Form von Broadcastdaten und Daten in Form von interaktiven Inhalten übertragen werden. Dabei ist nicht vorgeschrieben, dass die Übertragung interaktiver Daten über bestimmte Kanaltypen erfolgen muss. So kann beispielsweise vorgesehen sein, dass die Daten in Form von interaktiven Inhalten über wenigstens einen Broadcastkanal übertragen werden. Ebenso kann vorgesehen sein, dass die Daten in Form von interaktiven Inhalten über wenigstens einen Interaktionskanal übertragen werden. Einige nicht ausschließliche Beispiele werden im weiteren Verlauf erläutert.

Vorzugsweise kann im hybriden Netzwerk auf der Anbieterseite wenigstens eine Rechnereinheit vorgesehen sein, wobei in der Rechnereinheit vorteilhaft automatisch ermittelt wird, ob und/oder welche Daten über einen Broadcastkanal oder über einen Interaktionskanal übertragen werden. Ein Auswahlkriterium für den jeweils geeigneten Kanal kann beispielsweise die Anzahl bestimmter Anfragen von der Nutzerseite zu einem bestimmten Thema sein.

In weiterer Ausgestaltung können in der wenigstens einen weiteren Übertragungsebene zusätzliche Informationsdaten - beispielsweise Spezialinformationen - zu den über den Broadcastkanal übertragenen Broadcastdaten übertragen werden.

Vorteilhaft kann die Aktivierung einer interaktiven Funktionalität, insbesondere einer Verlinkung, über wenigstens einen Interaktionskanal erfolgen.

Vorzugsweise können bei einer Kommunikation vom Nutzer in Richtung des Anbieters Daten über wenigstens einen Interaktionskanal von der Nutzerseite auf die Anbieterseite übertragen werden.

Nachfolgend wird zur Verdeutlichung des allgemeinen Erfindungsgedankens ein konkretes Beispiel beschrieben, ohne dass die Erfindung auf dieses Beispiel beschränkt ist. Bei diesem Beispiel soll die Übertragung von Daten auf insgesamt drei Übertragungsebenen stattfinden.

In der ersten Übertragungsebene erfolgt die Übertragung von Broadcastdaten über wenigstens einen Broadcastkanal. Hier findet eine grobe Datenverteilung an alle Nutzer statt. Aus dieser ersten Übertragungsebene soll in eine zweite, darunter liegende Übertragungsebene verzweigt werden können. Dazu ist ― beispielsweise in den übertragenen Broadcastdaten - eine interaktive Funktionalität in Form einer Verlinkung (ein interaktiver Button, eine IP-Adresse oder dergleichen) vorgesehen, die je nach Datenformat temporär oder dauerhaft zur Verfügung steht.

Im vorliegenden Beispiel sollen über den Broadcastkanal TV-Inhalte übertragen werden.

Beispielsweise kann vorgesehen sein, dass der TV-Inhalt nach der Verzweigung von der ersten in die zweite Übertragungsebene ein anderes Formatfenster aufweist. Beispielsweise könnte vorgesehen sein, dass der ursprüngliche TV-Inhalt weiterhin gezeigt wird, dass aber in der zweiten Übertragungsebene auch noch zusätzliche Informationen zum TV-Inhalt übertragen werden. Auch ist es denkbar, dass die ursprünglichen TV-Inhalte in der zweiten Übertragungsebene nicht mehr angezeigt werden, sondern dass nur noch Audioinformationen übertragen werden. Ebenso ist natürlich auch denkbar, dass die TV-Inhalte aus der ersten Übertragungsebene in der zweiten Übertragungsebene komplett ausgeblendet werden und nur noch die Zusatzinformationen angezeigt werden. Die geeignete Darstellung der Informationen ergibt sich in erster Linie nach Art und Größe der in der Endeinrichtung zur Verfügung stehenden Anzeigeeinrichtung, beispielsweise eines Displays.

Die zusätzlichen Informationen können, wenn es sich etwa um allgemeine Informationen handelt, über einen Broadcastkanal übertragen werden. Wenn es sich etwa um Spezialinformationen handelt, die gewöhnlich nur sehr selten oder nur von wenigen Nutzern abgefragt werden, können die Zusatzinformationen beispielsweise über einen Interaktionskanal übertragen werden.

Bei der Übertragung von Broadcastdaten handelt es sich in der Regel immer um einen "Massenversand" von Daten. Wenn in der zweiten Übertragungsebene vom Nutzer über seine Endeinrichtung eine Interaktion ausgelöst wird, kann beispielsweise ein Interaktionskanal ins Spiel kommen. Dabei kann eine auf der Anbieterseite vorgehaltene Rechnereinrichtung vorteilhaft intelligent und automatisch entscheiden, ob Daten über einen Broadcastkanal oder aber über einen Interaktionskanal übertragen werden sollen. Die Auswahl könnte beispielsweise von der Anzahl der zu einem bestimmten TV-Inhalt von der Nutzerseite übertragenen Anfragen oder Anforderungen abhängen.

Ebenso ist es möglich, dass über einen oder mehrere Broadcastkanal/kanäle verschiedene Gruppen von Informationen simultan übertragen werden. Über eine Interaktion kann dann eine bestimmte Gruppe von Informationen für eine Endeinrichtung freigeschaltet werden.

In der zweiten Übertragungsebene könnte im interaktiven Bereich beispielsweise auch eine Möglichkeit zum Download von Daten angeboten werden. Wiederum kann eine interaktive Funktionalität, insbesondere in Form einer Verlinkung, vorgesehen sein, die vom Nutzer aktiviert werden kann. Nach Aktivierung der Verlinkung wird automatisch in eine weitere, dritte Übertragungsebene verzweigt, in welcher dann der Download der Informationen ermöglicht wird.

Je nach Ausgestaltung kann der Download über einen Broadcastkanal oder einen Interaktionskanal angeboten werden. Angenommen, in der zweiten Übertragungsebene wird ein "Fan-Packet" zu einem übertragenen TV-Inhalt, beispielsweise einem Musikvideo, angeboten. Nun kann man davon ausgehen, dass kurz nach diesem Angebot eine große Anzahl von Nutzern darauf zugreifen wird. In diesem Fall könnte man den Download daher zunächst über einen Broadcastkanal zur Verfügung stellen, was wesentlich kostengünstiger ist. Wenn dann ein Nutzer erst zu einem späteren Zeitpunkt auf das Angebot zugreifen möchte, kann dieses natürlich jederzeit und individuell über einen Interaktionskanal zur Endeinrichtung des betreffenden Nutzers übertragen werden.

Durch das erfindungsgemäße Verfahren kann sich der Anbieter jederzeit an die Wünsche der Nutzer anpassen. Ebenso kann jeder Nutzer frei entscheiden, welche Art von Informationen er wann übertragen bekommen möchte. Wenn die Informationen über einen Broadcastkanal übertragen werden, ist dies in der Regel kostengünstiger. Allerdings steht die Information aufgrund der Übertragung nach dem Prinzip des Datenkarussells nur zu bestimmten Zeiten zur Verfügung, was für den Nutzer Wartezeiten bedeutet. Will er diese Wartezeiten nicht in Kauf nehmen, kann er die gewünschten Daten jederzeit über einen Interaktionskanal übertragen bekommen.

Vorteilhaft werden die von der Anbieterseite auf die Endeinrichtung(en) auf der Nutzerseite übertragenen Daten auf einer der/den Endeinrichtung(en) zugeordneten Anzeigeeinrichtung zumindest zeitweilig dargestellt. Bei der Anzeigeeinrichtung handelt es sich insbesondere um ein Display.

Insbesondere das Display von mobilen Endeinrichtungen ist vergleichsweise zu einer stationären Endeinrichtung, beispielsweise einem gewöhnlichen Fernseher, relativ klein. Es existieren TV-Programme oder Streams, welche Informationen innerhalb des Streams darstellen wie beispielsweise Texte und dergleichen. Diese Informationen sind auf einer mobilen Endeinrichtung in der Regel nur ungenügend lesbar. Folglich kann es vorteilhaft sein, Stream-Daten und beispielsweise Text-Daten zwar gleichzeitig zu übertragen, allerdings auf der mobilen Endeinrichtung separat darzustellen. Diese Darstellung von Text-Daten kann beispielsweise entsprechend vergrößert und damit besser lesbar dargestellt werden. Damit erhöht sich automatisch auch die Zielgruppe für derartige Applikationen. Diese besondere Darstellungsmöglichkeit von Inhalten auf dem Display kann der Nutzer der Endeinrichtung beispielsweise dadurch realisieren, dass er mittels der interaktiven Funktionalität aus einer bestimmten Übertragungsebene, in der nur die Stream-Daten angeboten werden, in eine andere Übertragungsebene verzweigt, in der die beschriebene besondere Übertragung von Daten zur Verfügung gestellt wird.

In weiterer Ausgestaltung können die in den einzelnen Übertragungsebenen übertragenen Daten zumindest zeitweilig in wenigstens einer Speichereinrichtung abgespeichert werden. Wenn die Speichereinrichtung der Endeinrichtung zugeordnet ist, kann der Nutzer auch noch zu späteren Zeitpunkten auf die übertragenen Daten zurückgreifen.

Vorteilhaft kann weiterhin vorgesehen sein, dass von der Anbieterseite zumindest zeitweilig die zu übertragenden Daten betreffende Servicedaten auf die wenigstens eine Endeinrichtung übertragen werden, dass die Servicedaten zumindest Zeitdaten, wann die betreffenden Daten übertragen werden, umfassen und dass die Servicedaten in der wenigstens einen Endeinrichtung abgespeichert und zu bestimmten Zeiten und/oder Ereignissen automatisch aktualisiert werden.

Bei den Servicedaten handelt es sich grundsätzlich um solche Daten, die die zu übertragenden Daten betreffen und charakterisieren. Servicedaten dienen beispielsweise dazu, dem nutzer Informationen über die zu übertragenden beziehungsweise die übertragenen Daten zu geben, damit dieser eine für ihn gewünschte Auswahl treffen kann. Nachfolgend werden einige nicht ausschließliche Beispiele erläutert, wie die Servicedaten beschaffen sein können.

Bei den Servicedaten kann es sich beispielsweise um sogenannte EPG-Daten (Electronic Program Guide) oder ESG-Daten (Electronic Service Guide) handeln. Bei ESG-Daten handelt es sich um im Vergleich zu den EPG-Daten erweiterte Servicedaten.

Damit ein Nutzer weiß, wann die für ihn interessanten Dateninhalte in Form von Übertragungsdaten von der Anbieterseite übertragen werden, existieren beispielsweise sogenannte "Electronic Program Guides (EPG)". Bei einem EPG handelt es sich um eine elektronische Programmvorschau-Datei, in der zumindest die Zeiten, wann welche Daten übertragen werden, angegeben sind. Darüber hinaus können die EPG-Daten auch noch informationen zu den jeweiligen Übertragungsdaten aufweisen, beispielsweise in Form von Inhaltsangaben, Werbe-Trailern und dergleichen. Man könnte ein EPG somit auch mit einer Art elektronischer TV-Zeitschrift vergleichen. "Electronic Program Guides" an sich sind im Stand der Technik bereits bekannt.

ESG-Daten können Servicedaten über bestimmte angebotene Dienste enthalten. Das können beispielsweise um derartige Servicedaten erweiterte EPG-Daten sein. Bei den ESG-Daten kann es sich aber auch um Servicedaten handeln, die sich nur auf die angebotenen Dienste beziehen.

Vorzugsweise aktiviert sich die wenigstens eine Endeinrichtung automatisch, um von der Anbieterseite übertragene Daten zu empfangen, sobald solche Daten übertragen werden, die von dem Nutzer aus den auf seiner Endeinrichtung befindlichen Servicedaten zuvor ausgewählt worden sind.

Durch die Nutzung solcher Servicedaten wird zunächst erreicht, dass die Endeinrichtung nicht mehr dauerhaft aktiv sein muss, um zu "horchen", wann die gewünschten/angeforderten Übertragungsdaten "vorbeikommen" beziehungsweise übertragen werden. Die Endeinrichtung muss sich erst dann aktivieren, wenn die Übertragung der Daten auch tatsächlich stattfindet. Damit können die Endeinrichtungen besonders energiesparend betrieben werden. Das ist insbesondere dann von Vorteil, wenn die Endeinrichtungen als mobile Endeinrichtungen ausgebildet sind.

Beispielsweise kann sich die Endeinrichtung zunächst energiesparend in einem Stand-By-Modus befinden. Wenn nun die Übertragung der Übertragungsdaten ansteht, schaltet sich die Endeinrichtung automatisch aktiv, so dass die gewünschten Daten empfangen werden können.

Die Servicedaten beinhalten zumindest Zeitdaten, wann die betreffenden Übertragungsdaten übertragen werden. Der Endeinrichtung werden somit Informationen darüber übertragen, wann sich die Endeinrichtung aktivieren beziehungsweise einschalten soll, um die Übertragungsdaten zu empfangen.

Die Servicedaten werden in der wenigstens einen Endeinrichtung abgespeichert und somit für den Nutzer jederzeit verfügbar gemacht. Dieser muss nicht mehr auf die Übertragung der Servicedaten warten, sondern kann sich jederzeit und ganz in Ruhe die ihn interessierenden Inhalte aus den Servicedaten auswählen.

Zu bestimmten Zeiten, beispielsweise in bestimmten Zeitabständen, oder zu bestimmten Ereignissen, etwa wenn kurzfristig eine Programmänderung bezüglich der Übertragung der Übertragungsdaten angesetzt wird, werden die in der Endeinrichtung abgelegten Servicedaten automatisch aktualisiert. Die Aktualisierung wird anbieterseitig vorgenommen. Von der Anbieterseite werden die aktualisierten Daten über wenigstens einen Übertragungskanal auf die Endeinrichtung(en) übertragen, wo die Servicedaten entsprechend aktualisiert werden. Der Vorteil bei dieser Vorgehensweise liegt darin, dass jeweils nur die aktualisierten Servicedaten, nicht jedoch die Gesamtheit aller Servicedaten übertragen werden muss, was Ressourcen bei den Übertragungskanälen einspart. Auf gleiche Weise können veraltete Servicedaten aus der Endeinrichtung gelöscht werden.

Der Nutzer der Endeinrichtung kann aus den ihm zur Verfügung stehenden Servicedaten auswählen, welche Übertragungsdaten er empfangen möchte. Da die Servicedaten auch Zeitdaten, wann die betreffenden Übertragungsdaten übertragen werden, umfassen, "weiß die Endeinrichtung" genau, wann die Übertragungsdaten übertragen werden. Wenn die Übertragungsdaten übertragen werden, schaltet sich die Endeinrichtung automatisch in einen aktiven Zustand, um die Übertragungsdaten zu empfangen.

Die Endeinrichtung benötigt zumindest eine Servicedaten-Datei, beispielsweise einen EPG welcher im Wesentlichen einer elektronischen TV-Zeitschrift entspricht. Dieser EPG kann aber vorteilhaft noch durch weitere Informationen angereichert werden, wie beispielsweise zu welchen Zeiten und an welchen Tagen zusätzliche interaktive mobile Klienten-Applikationen auf die Endeinrichtung übertragen werden können oder zu welchen Zeiten und an welchen Tagen weitergehende Daten für die zusätzlichen interaktiven Klienten-Applikationen empfangen werden können. Dabei handelt es sich dann um einen ESG.

Vorteilhaft werden die Servicedaten von allen verfügbaren Übertragungskanälen eingesammelt. Damit ist bekannt, welcher Übertragungskanal zu welcher Zeit welche Übertragungsdaten, beispielsweise welchen Werbe-Trailer, welchen Film oder dergleichen zeigt. Die Servicedaten-Datei beschreibt ebenfalls, zu welchen Zeiten welche Klienten-Applikationen und/oder welche Inhaltsdaten angeboten werden. Periodisch wird nun diese Service-Information via eines Übertragungskanals immer aktualisiert bereitgehalten. Die Frequenz, mit der die Service-Informationen wiederholt werden, kann fest definiert und auf der Endeinrichtung vorgehalten werden. Damit ist es möglich, Downloads durchzuführen ohne das jeweilige Triggern des Nutzers zu benötigen. Wesentlich ist, dass die Endeinrichtung a-priori weiß, wann welche Daten zur Verfügung stehen werden. Damit muss nicht gelauscht werden (Energieersparnis). Es muss auch keine komplette separate Bandbreite nur für Service-Informationen reserviert werden. Stattdessen werden diese Informationen zu gewissen Zeiten für alle Endeinrichtungen über wenigstens einen Übertragungskanal zur Verfügung gestellt. Nach diesem Verfahren können Klienten-Applikationen vor allem relative kurzzeitig nach der Ausstrahlung eines Werbe-Trailers oder während eines TV-Events ausgestrahlt werden. Die Nutzer registrieren sich interaktiv für den Download und bekommen dann kurze Zeit danach (eventuell 10 sec) die Applikation (ohne oder mit rudimentären Daten) übertragen.

In weiterer Ausgestaltung können auf der Anbieterseite auch virtuelle Zeitdaten erzeugt und auf die wenigstens eine Endeinrichtung auf der Nutzerseite übertragen werden, wobei die virtuellen Zeitdaten auf die zu übertragenden Daten bezogene Zeitdaten darstellen und wobei die virtuellen Zeitdaten in der wenigstens einen Endeinrichtung empfangen und in dieser automatisch fortgezählt werden.

Die virtuelle Zeit wird in einem entsprechenden Generator auf der Anbieterseite, beispielsweise in einer auf der Anbieterseite befindlichen Rechnereinrichtung, erzeugt. Die virtuelle Zeit wird benötigt, um logisch die Laufzeitunterschiede bei der Übertragung von Daten über den Übertragungskanal auszugleichen.

Das soll anhand eines nicht ausschließlichen konkreten Beispiels verdeutlicht werden, bei dem das Übertragungsnetzwerk zwei unterschiedliche Übertragungskanaltypen aufweist, nämlich einen Broadcastkanal und einen interaktiven Kommunikationskanal. Durch die Erzeugung einer virtuellen Zeit können dann insbesondere Laufzeitunterschiede beim Übertragen im Broadcastkanal sowie im Interaktionskanal ausgeglichen werden. Die Komponente der Broadcastübertragung kann beispielsweise Laufzeitunterschiede von etwa 10 Sekunden einnehmen. Ebenso kann der Interaktionskanal, beispielsweise ein GPRS-Rückkanal, Laufzeitunterschiede bis zu 30 Sekunden einnehmen. Hierbei kann vor allen die Initialisierungszeit inklusive Kostenprüfungen entsprechende Auswirkungen besitzen. Aus diesen Gründen ist es bei manchen Applikationen schwierig oder sogar unmöglich, die reale Zeit zu verwenden. Vielmehr ist es in solchen Fällen zwingend notwendig, eine virtuelle Zeit einzuführen.

Neben dem Generator der virtuellen Zeit auf der Anbieterseite ist in der Endeinrichtung auf der Nutzerseite ein Empfänger für die virtuelle Zeit vorgesehen. Dieser Empfängt die virtuelle Zeit und zählt die virtuelle Zeit selbstständig fort.

Vorteilhaft kann in den vorgenannten Fällen vorgesehen sein, dass die virtuellen Zeitdaten aus einem Zeitpaar bestehen, wobei ein Teil des Zeitpaars aus Echtzeitdaten besteht und wobei der andere Teil des Zeitpaars aus den eigentlichen virtuellen Zeitdaten besteht.

Die virtuelle Zeit besteht in diesem Fall aus dem Zeitpaar (real_time, virtual_time). Bei der Erzeugung auf der Anbieterseite, beispielsweise in einer entsprechenden Rechnereinrichtung, ist die reai_time = virtuai_time. Werden die Daten mit dem Zeitpaar versendet und kommen in der Endeinrichtung an, so wird real_time nicht mehr verändert, sondern nur noch die virtual_time genommen. Der Empfänger für die virtuelle Zeit in der Endeinrichtung wird nach dieser Zeit gestellt und beispielsweise im normalen Sekundentakt hoch gezählt. Tritt ein Event in einer interaktiven Klienten-Applikationen auf, so wird dieses mit dem Zeitpaar als Parameter versehen. Werden Event-Daten von der Endeinrichtung zur Anbieterseite, beispielsweise zu einer entsprechenden Rechnereinrichtung, übertragen, so wird das Zeitpaar mit übertragen. Damit kann auf der Anbieterseite, beispielsweise in der Rechnereinrichtung, herausgefunden werden, wie lange die Sendedauer (und beispielsweise eine Überlegdauer beim Nutzer) war und vor allem, ob das Event noch rechzeitig innerhalb der vorgegebenen Überlegdauer war und dergleichen.

Beispielsweise kann vorgesehen sein, dass sich die wenigstens eine Endeinrichtung bereits in einem vorgegebenen Zeitraum, bevor solche Übertragungsdaten übertragen werden, die von dem Nutzer aus den auf seiner Endeinrichtung befindlichen Servicedaten zuvor ausgewählt worden sind, automatisch aktiviert, um die von der Anbieterseite übertragenen Übertragungsdaten zu empfangen. Damit wird auf jeden Fall sichergestellt, dass die Endeinrichtung aktiviert ist, wenn die Übertragungsdaten von der Anbieterseite aus übertragen werden.

Vorteilhaft können von der Anbieterseite weiterhin zumindest zeitweilig Echtzeitdaten auf die wenigstens eine Endeinrichtung übertragen werden, wobei in der wenigstens einen Endeinrichtung Zeit-Synchronisierungsmittel vorgesehen sind, über die in der wenigstens einen Endeinrichtung abgelegte Zeitdaten mit den übertragenen Echtzeitdaten synchronisiert werden. Durch die Übertragung solcher Echtzeitdaten kann sichergestellt werden, dass sowohl auf der Anbieterseite als auch auf den Nutzerseite bezüglich der Übertragungsdaten jeweils die identische Zeit vorherrscht. Damit wird verhindert, dass sich die Endeinrichtung zu einem falschen Zeitpunkt aktiviert, wenn überhaupt keine Datenübertragung über den Übertragungskanal vorgenommen wird. Auch ist es auf diese Weise möglich, eventuelle Zeitunterschiede zwischen der Anbieterseite und der Nutzerseite auszugleichen.

Beispielsweise kann vorgesehen sein, dass die Servicedaten und/oder Echtzeitdaten und/oder virtuellen Zeitdaten in demselben Übertragungskanal oder in demselben Übertragungskanaltyp übertragen werden, in dem auch die Übertragungsdaten übertragen werden. In anderer Ausgestaltung kann vorgesehen sein, dass die Servicedaten und/oder Echtzeitdaten und/oder virtuellen Zeitdaten in einem anderen Übertragungskanal als die Übertragungsdaten übertragen werden.

Wie weiter oben schon ausgeführt wurde, kann auf der Anbieterseite vorteilhaft wenigstens eine Rechnereinrichtung vorgesehen sein, wobei die Übertragungsdaten und/oder Servicedaten und/oder Echtzeitdaten und/oder virtuellen Zeitdaten von der wenigstens einen Rechnereinrichtung auf die wenigstens eine Endeinrichtung übertragen werden. Dabei kann in der Rechnereinheit vorteilhaft automatisch ermittelt werden, ob und/oder welche Daten über einen Broadcastkanal oder über einen Interaktionskanal übertragen werden.

Wie weiter oben bereits ausgeführt wurde, ist die Erfindung nicht auf bestimmte Typen von Broadcastkanälen beschränkt. Beispielsweise kann wenigstens ein Broadcastkanal als unidirektionaler, breitbandiger Broadcastkanal ausgebildet sein. Wenigstens ein Broadcastkanal kann dabei vorteilhaft als digitaler Rundfunkkanal, insbesondere als DVB-T (Digital Video Broadcasting - Terrestrisch) und/oder DVB-H (Digital Video Broadcasting - Handheld) - Kanal ausgebildet sein.

Ebenso ist die Erfindung nicht auf bestimmte Typen von Interaktionskanälen beschränkt. Beispielsweise kann wenigstens ein Interaktionskanal als bidirektionaler Kanal ausgebildet sein. Wenigstens ein Interaktionskanal kann vorzugsweise als Telekommunikationskanal, insbesondere als Mobilfunkkanal, ausgebildet sein. Der Interaktionskanal ist dann Bestandteil eines Telekommunikationsnetzes, etwa eines Mobilfunknetzes nach dem GSM (Global System for Mobile Communication)-, GPRS (General Packet Radio Service)- oder UMTS (Universal Mobile Telecommunication System)- Standard.

Gemäß dem zweiten Aspekt der Erfindung wird ein hybrides Netzwerk bereitgestellt, aufweisend ein Broadcastnetzwerk mit wenigstens einem Broadcastkanal zum Übertragen von Daten von der Anbieterseite auf wenigstens eine Endeinrichtung auf der Nutzerseite, sowie ein Kommunikationsnetzwerk mit wenigstens einem Interaktionskanal zur Interaktion zwischen der Nutzerseite und der Anbieterseite. Das hybride Netzwerk ist erfindungsgemäß dadurch gekennzeichnet, dass zur Datenübertragung zwei oder mehr Übertragungsebenen vorgesehen sind, dass eine erste Übertragungsebene wenigstens einen Broadcastkanal zur Übertragung von Broadcastdaten auf die Endeinrichtung(en) aufweist, dass wenigstens eine weitere Übertragungsebene zur Datenübertragung wenigstens einen Broadcastkanal und/oder wenigstens einen Interaktionskanal aufweist, dass zumindest temporär wenigstens eine interaktive Funktionalität, insbesondere eine Verlinkung zu wenigstens einer weiteren Übertragungsebene, vorgesehen ist und dass über eine Aktivierung der interaktiven Funktionalität eine Verzweigung von der ersten Übertragungsebene in wenigstens eine weitere Übertragungsebene herbeiführbar ist.

Insbesondere soll das hybride Netzwerk Mittel zur Durchführung des wie vorstehend beschriebenen erfindungsgemäßen Verfahrens aufweisen.

Mit der vorliegenden Erfindung in Form des erfindungsgemäßen Verfahrens sowie in Form des erfindungsgemäßen hybriden Netzwerks wird eine Übertragung von vorzugsweise mobilen, elektronischen Informations- und Unterhaltungsdiensten möglich, die eine breitbandige, kosteneffiziente Datenverteilung an viele Nutzer, beispielsweise über ein digitales Rundfunknetz wie DVB-T, mit der individuellen, abrechenbaren, interaktiven Übertragung über ein Kommunikationsnetze, insbesondere über ein Mobilfunknetz (GSM/GPRS/UMTS), kombinieren.

Die vorliegende Erfindung optimiert die Effizienz des Übertragungsverfahrens. Für den Inhalteanbieter und Netzbetreiber werden Übertragungskosten und -ressourcen, abhängig von der Zahl und den Bedürfnissen der gleichzeitig adressierten Endnutzer optimiert. Dafür wird beispielsweise ein kosten- und ressourceneffizientes Streaming über das Rundfunknetz für viele passive Nutzer verwendet, sowie ein Download über das Rundfunknetz für proaktiv interessierte und zur Mehrzahlung bereite Nutzer, während die Datenübertragung über das interaktive Netz, zum Beispiel ein Mobilfunknetz, zur Abrechnung und Individualisierung beziehungsweise Sicherstellung der vollständigen Übertragung dient.

Die vorliegende Erfindung stellt somit auch ein Verfahren zur Koordinierung beziehungsweise zur Optimierung der Übertragung von Daten im Zusammenwirken von dem "synchronen-" und dem "store-and-forward-Fall" via DVB-T/H und interaktivem mobilen Rückkanal, unter der Berücksichtigung von begrenzter Bandbreite (Breitband- und mobiler Kanal), begrenzten Energieressourcen, begrenzter Darstellungsfähigkeit auf der insbesondere mobilen Endeinrichtung und unter Berücksichtigung des Nutzer- beziehungsweise des Streaming-Sende-Verhaltens dar.

Die Übertragung von Daten findet vorzugsweise über Rechnereinrichtungen (Server) im Hintergrundsystem auf zu empfangende interaktive mobile Klienten-Applikationen statt, welche sich a-priori auf der mobilen Endeinrichtung befinden oder mit Hilfe des erfindungsgemäßen Verfahrens auf die mobile Endeinrichtung transferiert wurden. Die übertragenen Daten bestehen vor allem aus Applikationen, Content-Daten und Meta-Daten, welche die Content-Daten beschreiben.

Wenigstens eine dieser interaktiven mobilen Klienten-Applikationen ist in der Lage gleichzeitig TV ähnliche Streaming-Inhalte und zeitsynchrone Daten zu empfangen und interaktiv mit der Rechnereinrichtung im Hintergrundsystem zusammenzuarbeiten (synchroner Fall). Wie oben erwähnt kann die interaktive mobile Klienten-Applikation andere interaktive Zusatz-Applikationen inklusive Content- und Meta-Daten empfangen, welche auf der Endeinrichtung, nach dem Herunterladen, ausgeführt werden können (store-and-forward Fall). Diese interaktiven Zusatz-Applikationen werden in der Regel fortwährend periodisch mit aktuellen Content- und Meta-Daten versorgt.

Das Herunterladen der interaktiven Zusatz-Applikation oder aber von Daten jedweder Art kann via Breitband oder via interaktivem mobilem Rückkanal (GPRS/UMTS) erfolgen. Diese Entscheidung wird vorteilhaft in Abhängigkeit der Wirtschaftlichkeit getroffen. Dies kann beispielsweise auf der Anbieterseite, beispielsweise in der wenigstens einen Rechnereinrichtung erfolgen.

Gemäß der vorliegenden Erfindung kann von verschiedenen Annahmen zum Nutzerverhalten ausgegangen werden. Ein Nutzer wird sich im Wesentlichen durch zwei Möglichkeiten animieren lassen, eine interaktive mobile Klienten-Applikationen auszuwählen. Zum einem durch das Lesen/Studieren der Servicedaten-Datei, beispielsweise des EPG oder des ESG, welche(r) ihn über die Inhalte und Zeiten der übertragenen Daten sowie über zusätzliche Inhalte, beispielsweise zusätzliche mobile Dienste und dergleichen, informiert/informieren. Eine andere Möglichkeit der Animierung stellt die interaktive Werbung dar. Interaktive Werbung funktioniert in der Regel wie folgt. Ein Nutzer sieht beispielsweise einen Musik-Kanal und wird über eine Musik-Star-Applikation informiert/beworben. Die Musik-Star-Applikation ist eine interaktive mobile Klienten-Applikation, welche Informationen über den gewünschten Musik-Star aktualisiert enthält. Entscheidet sich der Nutzer für die Musik-Star-Applikation, beispielsweise durch Aktivierung einer interaktiven Funktionalität - etwa durch Klicken von gewissen Tasten - oder dergleichen, dann kann das Herunterladen der Musik-Star-Applikation entweder sofort via dem mobilen Interaktionskanal erfolgen oder die mobile Endeinrichtung kann sich für das Herunterladen, beispielsweise via DVB-H Broadcast, dieser Musik-Star-Applikation registrieren. Bei dem Herunterladen via DVB-H Broadcast sollte der Broadcast der Musik-Star-Applikation vorzugsweise relativ zeitnah erfolgen, damit der Nutzer nicht gelangweilt wird. Hat der Nutzer die Musik-Star-Applikation auf seiner Endeinrichtung, so wird diese zu gewissen Zeiten, vorzugsweise via DVB-H Broadcast, mit aktuellen Inhaltsdaten versorgt.

Folglich besitzt man nun die Möglichkeit, Streams mit zeitsynchronen Daten und weiteren zusätzlichen Daten (interaktiven mobilen Klienten-Applikationen) zu übertragen und dabei den mobilen Randbedingungen bezüglich eines schonenden Umgangs mit Ressourcen Rechnung zu tragen.

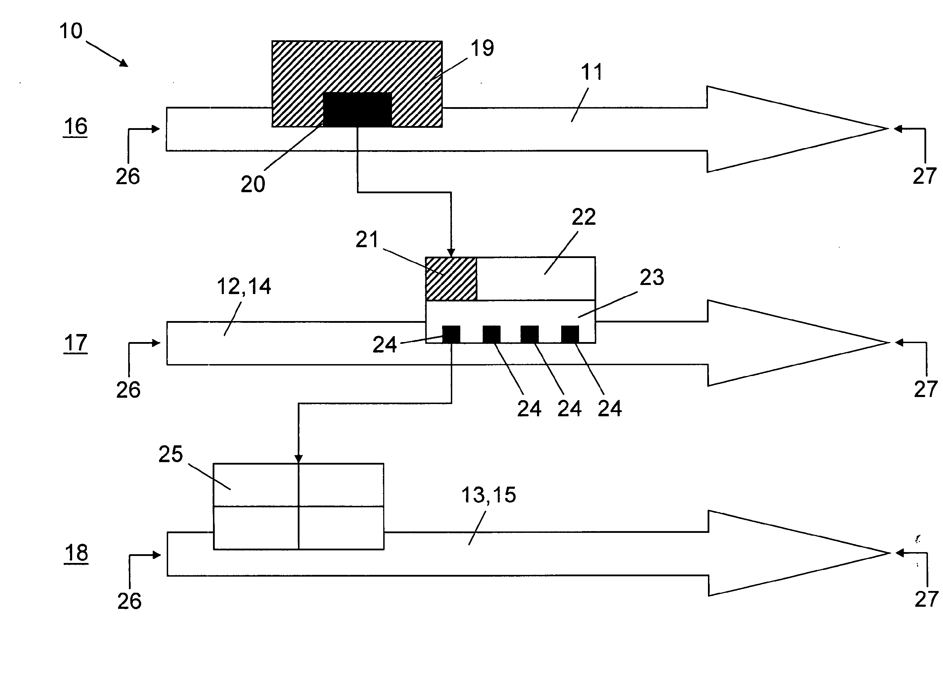

Die Erfindung wird nun anhand eines Ausführungsbeispiels unter Bezugnahme auf die beiliegende Zeichnung näher erläutert. Dabei zeigt die einzige Figur in schematischer Darstellung den Ablauf des erfindungsgemäßen Verfahrens.

In der Figur ist schematisch ein hybrides Netzwerk 10 dargestellt. Das hybride Netzwerk besteht aus einem Broadcastnetzwerk mit wenigstens einem Broadcastkanal 11, 12, 13. Hierbei kann es sich beispielsweise um ein digitales Rundfunknetz wie DVB-T/H oder dergleichen handeln. Weiterhin beinhaltet das hybride Netzwerk 10 wenigstens ein Kommunikationsnetzwerk, insbesondere ein Mobilfunknetz nach dem GSM-, oder GPRS- oder UMTS-Standard, mit wenigstens einem Interaktionskanal 14, 15. Die Broadcastkanäle 11, 12, 13 sind als unidirektionale, breitbandige Vorwärtskanäle ausgebildet, während die Interaktionskanäle 14, 15 als bidirektionale Kanäle ausgebildet sind. Über die verschiedenen Kanäle findet ein Datenaustausch zwischen der Anbieterseite 26 und der Nutzerseite 27 statt. Dazu verfügt die Anbieterseite 26 über wenigstens eine Rechnereinrichtung (nicht dargestellt), mit der den Nutzern auf der Nutzerseite 27 zugeordnete - vorzugsweise mobile - Endeinrichtungen (nicht dargestellt) zumindest zeitweilig kommunizieren.

Die Übertragung der Daten von der Anbieterseite 26 zur Nutzerseite 27 erfolgt über verschiedene Übertragungsebenen 16, 17, 18. Im Beispiel sind drei Übertragungsebenen dargestellt, wobei die Erfindung nicht auf eine bestimmte Anzahl von Übertragungsebenen beschränkt ist.

In einer ersten Übertragungsebene 16 werden mittels der Broadcast-Technologie (zum Beispiel DVB-T/H) Broadcastdaten 19 über den Broadcastkanal 11 von der Anbieterseite 26 auf die Nutzerseite 27 übertragen. Über den Broadcastkanal 11 werden die Broadcastdaten 19 zu einer großen Anzahl von Nutzern übertragen. Bei den Broadcastdaten kann es sich beispielsweise um TV-Inhalte handeln, etwa Musik-TV-Inhalte in Form von Musikvideos und dergleichen. Da die Broadcastdaten in der Regel nach dem Prinzip eines "zeitgeplanten Streamings" übertragen werden, hat der Nutzer jeweils so lange zu warten, bis die gewünschte Sequenz erneut übertragen wird.

Um dem Nutzer die Möglichkeit zu geben, bezüglich der gesendeten Broadcastdaten 19 eine Interaktion zu initiieren, oder aber um weitergehende Informationen zu den Broadcastdaten 19 zu erhalten, besteht nun die Möglichkeit, in eine zweite Übertragungsebene 17 zu verzweigen. Dazu weisen die Broadcastdaten 19 der ersten Übertragungsebene 16 zumindest zeitweilig eine interaktive Funktionalität 20, beispielsweise eine in Form einer als interaktiver Button ausgestaltete Verlinkung, auf. Natürlich ist auch denkbar, dass die die Verlinkung herbeiführende interaktive Funktionalität in der auf der Endeinrichtung befindlichen Klienten-Applikation, oder aber als fester Bestandteil in der Endeinrichtung selbst implementiert ist.

Wenn nun der Nutzer diese Verlinkung 20 aktiviert, wird von der ersten 16 in die zweite 17 Übertragungsebene verzweigt, was durch einen entsprechenden Pfeil dargestellt wird. Diese zweite Übertragungsebene 17 weist im vorliegenden Beispiel einen Broadcastkanal 12 sowie einen Interaktionskanal 14 auf. In der zweiten Übertragungsebene wird eine interaktive Übertragung von Daten angeboten. Während die Übertragung der Daten in der ersten Übertragungsebene 16 für eher passive Nutzer gedacht ist, die die angebotenen TV-Inhalte lediglich konsumieren möchten, erhält der Nutzer in der zweiten Übertragungsebene 17 Zugang zu einer interaktiven Version der übertragenen Broadcastdaten 19 aus Übertragungsebene 16.

Die in der Übertragungsebene 16 übertragenen Broadcastdaten 19 werden auch in der zweiten Übertragungsebene 17 noch übertragen und auf der Endeinrichtung des Nutzers dargestellt, allerdings in Form von reduzierten (downsized) Broadcastdaten 21. Zusätzlich werden auf der Anzeigeeinrichtung der Endeinrichtung Zusatzinformationen 22, 23 angezeigt. Dabei kann es sich beispielsweise um Zusatzinformationen 22 zu den Broadcastdaten 21 handeln, oder aber beispielsweise auch um eine Art Informationsticker 23. Im vorliegenden Beispiel umfasst der Informationsticker 23 eine Reihe von interaktiven Funktionalitäten 24 in Form von Verlinkungen, mittels derer auf wenigstens eine weitere Übertragungsebene 18 verzweigt werden kann.

Die Broadcastdaten 21 kommen weiterhin über einen Broadcastkanal 12, wobei dieser Broadcastkanal 12 identisch mit dem Broadcastkanal 11 sein kann. Die Zusatzinformationen 22, 23 können über einen Interaktionskanal 14 implementiert werden. Je nach Grad der Personalisierung können die Zusatzinformationen 22 und/oder 23 natürlich auch über den Broadcastkanal 12 übertragen werden. Beispielsweise kann in der zweiten Übertragungsebene 17 bezüglich des in Übertragungsebene 16 übertragenen Musik-TV-Inhalts 19 eine reduzierte Fassung 21 des Musik-TV-Inhalts nebst weitergehenden Zusatzinformationen 22 zu dem TV-Inhalt sowie einem Informationsticker 23 mit Verlinkungen 24 zu weitergehenden Downloadbereichen übertragen werden. Der Nutzer kann bezüglich des Musik-TV-Inhalts nunmehr interagieren, kann einige hinzugefügte Informationen früher bekommen, muss aber immer noch auf den Übertragungsbeginn des Musik-TV-Inhalts warten.

Wenn der Nutzer nun Daten bezüglich des Musik-TV-Inhalts herunterladen und zur dauerhaften, von der Übertragung zeitlich unabhängigen Verfügung haben möchte, startet er durch Aktivierung einer Verlinkung 24 in der Übertragungsebene 17 eine Verzweigung in eine dritte Übertragungsebene 18. In dieser Übertragungsebene 18 stehen dem Nutzer Downloaddaten 25 zur Verfügung, die er auf seine Endeinrichtung herunterladen und auf dieser speichern kann. Das Herunterladen kann beispielsweise über einen Broadcastkanal 13 erfolgen, wenn die Downloaddaten 25, nach dem Prinzip des Datenkarussells, zu bestimmten Zeiten zur Verfügung gestellt werden. Der Broadcastkanal 13 kann dabei identisch mit dem Broadcastkanal 11 und/oder 12 sein. Natürlich kann das Herunterladen auch individuell und zeitlich unabhängig über einen Interaktionskanal 15 erfolgen. Der Interaktionskanal 15 kann dabei identisch mit dem Interaktionskanal 14 sein. Der Weg des Herunterladens hängt beispielsweise von der Menge der Nutzer ab, die einen solchen Download wünschen. Wenn eine große Anzahl von Nutzern zur gleichen Zeit Downloaddaten 25 herunterladen möchte, bietet sich schon aus Kostengründen die Übertragung der Downloaddaten 25 über den Broadcastkanai 13 an. Wenn der Nutzer eine Übertragung der Downloaddaten25 individuell und unabhängig von bestimmten Zeitfenstern wünscht, kann die Übertragung über den Interaktionskanal 15 erfolgen. Beispielsweise kann sich der Nutzer zu dem Musik-TV-Inhalt auf diese Weise problemlos Downloaddaten 25 in Form eines "Fan-Packets" auf seine Endeinrichtung herunterladen und dort speichern, die er dann jederzeit und ohne Zeitverzögerung nutzen kann.

### Bezugszeichenliste

- 10: Hybrides Netzwerk
- 11: Broadcastkanal
- 12: Broadcastkanal
- 13: Broadcastkanal
- 14: Interaktionskanal
- 15: Interaktionskanal
- 16: erste Übertragungsebene
- 17: zweite Übertragungsebene
- 18: dritte Übertragungsebene
- 19: Broadcastdaten
- 20: interaktive Funktionalität (z.B. Verlinkung)
- 21: Broadcastdaten (downsized)
- 22: zusätzliche Informationsdaten
- 23: zusätzliche Informationsdaten (Informationsticker)
- 24: interaktive Funktionalität (z.B. Verlinkung)
- 25: Downloaddaten
- 26: Anbieterseite
- 27: Nutzerseite

## Patentansprüche

1. Verfahren zum Übertragen von Daten in einem hybriden Netzwerk (10), aufweisend ein Broadcastnetzwerk mit wenigstens einem Broadcastkanal (11, 12, 13) zum Übertragen von Daten von der Anbieterseite (26) auf wenigstens eine Endeinrichtung auf der Nutzerseite (27), sowie ein Kommunikationsnetzwerk mit wenigstens einem Interaktionskanal (14, 15) zur Interaktion zwischen der Nutzerseite (27) und der Anbieterseite (26),
**dadurch gekennzeichnet,**
**dass** die Datenübertragung auf zwei oder mehr Übertragungsebenen (16, 17, 18) stattfindet,
**dass** auf einer ersten Übertragungsebene (16) Broadcastdaten (19) über wenigstens einen Broadcastkanal (11) auf die Endeinrichtung(en) übertragen werden,
**dass** zumindest temporär wenigstens eine interaktive Funktionalität, insbesondere eine Verlinkung (20) zu wenigstens einer weiteren Übertragungsebene (17; 18), vorgesehen ist,
**dass** über eine Aktivierung der interaktiven Funktionalität eine Verzweigung von der ersten Übertragungsebene (16) in wenigstens eine weitere Übertragungsebene (17; 18) herbeigeführt wird und
**dass** nach der Aktivierung der interaktiven Funktionalität über wenigstens einen Broadcastkanal (12; 13) und/oder wenigstens einen Interaktionskanal (14; 15) eine Datenübertragung auf der wenigstens einen weiteren Übertragungsebene (17; 18) stattfindet.

2. Verfahren nach Anspruch 1, **dadurch gekennzeichnet, dass** die wenigstens eine interaktive Funktionalität zumindest temporär über den Broadcastkanal (11) übertragen wird oder zumindest temporär Bestandteil der in der ersten Übertragungsebene (16) übertragenen Broadcastdaten (19) ist.

3. Verfahren nach Anspruch 1 oder 2, **dadurch gekennzeichnet, dass** über eine Aktivierung der wenigstens einen interaktiven Funktionalität eine Verzweigung von der ersten Übertragungsebene (16) in eine zweite Übertragungsebene (17) herbeigeführt wird und dass nach der Aktivierung der wenigstens einen interaktiven Funktionalität über wenigstens einen Broadcastkanal (12) und/oder wenigstens einen Interaktionskanal (14) eine Datenübertragung auf der zweiten Übertragungsebene (17) stattfindet.

4. Verfahren nach Anspruch 3, **dadurch gekennzeichnet, dass** für die in der zweiten Übertragungsebene (17) übertragenen Daten zumindest temporär wenigstens eine interaktive Funktionalität, insbesondere eine Verlinkung (24) zu wenigstens einer weiteren Übertragungsebene (18), vorgesehen ist, dass über eine Aktivierung der wenigstens einen interaktiven Funktionalität eine Verzweigung von der zweiten Übertragungsebene (17) in die wenigstens eine weitere Übertragungsebene (18) herbeigeführt wird und dass nach der Aktivierung der wenigstens einen interaktiven Funktionalität über wenigstens einen Broadcastkanal (13) und/oder wenigstens einen Interaktionskanal (15) eine Datenübertragung auf der wenigstens einen weiteren Übertragungsebene (18) stattfindet.

5. Verfahren nach Anspruch 4, **dadurch gekennzeichnet, dass** die wenigstens eine interaktive Funktionalität zumindest temporär über einen Kanal der zweiten Übertragungsebene (17) übertragen wird oder zumindest temporär Bestandteil von in der zweiten Übertragungsebene (17) übertragenen Daten ist.

6. Verfahren nach einem der Ansprüche 1 bis 5, **dadurch gekennzeichnet, dass** die Übertragung von Daten auf drei Übertragungsebenen (16, 17, 18) stattfindet, dass auf der ersten Übertragungsebene (16) Daten in Form von Broadcastdaten (19) übertragen werden, dass zumindest temporär wenigstens eine interaktive Funktionalität, insbesondere eine Verlinkung (20) in eine zweite Übertragungsebene (17), vorgesehen ist, dass auf der zweiten Übertragungsebene (17) Daten in Form von Broadcastdaten (21) und/oder in Form von zusätzlichen Informationsdaten (22, 23) übertragen werden, dass zumindest temporär wenigstens eine interaktive Funktionalität, insbesondere eine Verlinkung (24) in eine dritte Übertragungsebene (18), vorgesehen ist und dass auf der dritten Übertragungsebene (18) Daten in Form von Downloaddaten (25) übertragen werden.

7. Verfahren nach einem der Ansprüche 1 bis 6, **dadurch gekennzeichnet, dass** über eine Aktivierung wenigstens einer interaktiven Funktionalität, insbesondere einer Verlinkung (20, 24), eine Verzweigung von einer Übertragungsebene (16) zur Übertragung von Broadcastdaten (19) in wenigstens eine Übertragungsebene (17, 18) mit Möglichkeit zur Interaktion zwischen der Anbieterseite (26) und der Nutzerseite (27) herbeigeführt wird.

8. Verfahren nach einem der Ansprüche 1 bis 7, **dadurch gekennzeichnet, dass** in wenigstens einer der Übertragungsebenen (16, 17, 18) Daten in Form von interaktiven Inhalten übertragen werden und/oder dass in wenigstens einer der Übertragungsebenen (16, 17, 18) Daten in Form von Broadcastdaten und Daten in Form von interaktiven Inhalten übertragen werden.

9. Verfahren nach Anspruch 8, **dadurch gekennzeichnet, dass** die Daten in Form von interaktiven Inhalten über wenigstens einen Broadcastkanal (11, 12, 13) übertragen werden und/oder dass die Daten in Form von interaktiven Inhalten über wenigstens einen Interaktionskanal (14, 15) übertragen werden.

10. Verfahren nach einem der Ansprüche 1 bis 9, **dadurch gekennzeichnet, dass** im hybriden Netzwerk (10) auf der Anbieterseite (26) wenigstens eine Rechnereinheit vorgesehen ist und dass in der Rechnereinheit automatisch ermittelt wird, ob und/oder welche Daten über einen Broadcastkanal (11, 12, 13) oder über einen Interaktionskanal (14, 15) übertragen werden.

11. Verfahren nach einem der Ansprüche 1 bis 10, **dadurch gekennzeichnet, dass** in wenigstens einer weiteren Übertragungsebene (17, 18) zusätzliche Informationsdaten (22, 23, 25) zu den über den Broadcastkanal (11) übertragenen Broadcastdaten (19) übertragen werden.

12. Verfahren nach einem der Ansprüche 1 bis 11, **dadurch gekennzeichnet, dass** die Aktivierung einer interaktiven Funktionalität, insbesondere einer Verlinkung (20, 24) über wenigstens einen Interaktionskanal (14, 15) erfolgt.

13. Verfahren nach einem der Ansprüche 1 bis 12, **dadurch gekennzeichnet, dass** Daten über wenigstens einen Interaktionskanal (14, 15) von der Nutzerseite (27) auf die Anbieterseite (26) übertragen werden.

14. Verfahren nach einem der Ansprüche 1 bis 13, **dadurch gekennzeichnet, dass** die von der Anbieterseite (26) auf die Endeinrichtung(en) auf der Nutzerseite (27) übertragenen Daten auf einer der/den Endeinrichtung(en) zugeordneten Anzeigeeinrichtung zumindest zeitweilig dargestellt werden.

15. Verfahren nach einem der Ansprüche 1 bis 14, **dadurch gekennzeichnet, dass** die in den einzelnen Übertragungsebenen (16, 17, 18) übertragenen Daten zumindest zeitweilig in wenigstens einer Speichereinrichtung abgespeichert werden.

16. Verfahren nach einem der Ansprüche 1 bis 15, **dadurch gekennzeichnet, dass** von der Anbieterseite weiterhin zumindest zeitweilig die zu übertragenden Daten betreffende Servicedaten auf die wenigstens eine Endeinrichtung übertragen werden, dass die Servicedaten zumindest Zeitdaten, wann die betreffenden Daten übertragen werden, umfassen und dass die Servicedaten in der wenigstens einen Endeinrichtung abgespeichert und zu bestimmten Zeiten und/oder Ereignissen automatisch aktualisiert werden.

17. Verfahren nach Anspruch 16, **dadurch gekennzeichnet, dass** sich die wenigstens eine Endeinrichtung automatisch aktiviert, um von der Anbieterseite übertragene Daten zu empfangen, sobald solche Daten übertragen werden, die von dem Nutzer aus den auf seiner Endeinrichtung befindlichen Servicedaten zuvor ausgewählt worden sind.

18. Verfahren nach einem der Ansprüche 1 bis 17, **dadurch gekennzeichnet, dass** auf der Anbieterseite virtuelle Zeitdaten erzeugt und auf die wenigstens eine Endeinrichtung auf der Nutzerseite übertragen werden, dass die virtuellen Zeitdaten auf die zu übertragenden Daten bezogene Zeitdaten darstellen und dass die virtuellen Zeitdaten in der wenigstens einen Endeinrichtung empfangen und in dieser automatisch fortgezählt werden.

19. Verfahren nach einem der Ansprüche 1 bis 18, **dadurch gekennzeichnet, dass** wenigstens ein Broadcastkanal (11, 12, 13) als unidirektionaler, breitbandiger Broadcastkanal, insbesondere als digitaler Rundfunkkanal, etwa als DVB-T und/oder DVB-H - Kanal, ausgebildet ist.

20. Verfahren nach einem der Ansprüche 1 bis 19, **dadurch gekennzeichnet, dass** wenigstens ein Interaktionskanal (14, 15) als bidirektionaler Kanal, insbesondere als Telekommunikationskanal, etwa als Mobilfunkkanal, ausgebildet ist.

21. Hybrides Netzwerk (10), aufweisend ein Broadcastnetzwerk mit wenigstens einem Broadcastkanal (11, 12, 13) zum Übertragen von Daten von der Anbieterseite (26) auf wenigstens eine Endeinrichtung auf der Nutzerseite (27), sowie ein Kommunikationsnetzwerk mit wenigstens einem Interaktionskanal (14, 15) zur Interaktion zwischen der Nutzerseite (27) und der Anbieterseite (26),
**dadurch gekennzeichnet,**
**dass** zur Datenübertragung zwei oder mehr Übertragungsebenen (16, 17, 18) vorgesehen sind,
**dass** eine erste Übertragungsebene (16) wenigstens einen Broadcastkanal (11) zur Übertragung von Broadcastdaten (19) auf die Endeinrichtung(en) aufweist, dass wenigstens eine weitere Übertragungsebene (17, 18) zur Datenübertragung wenigstens einen Broadcastkanal (12; 13) und/oder wenigstens einen Interaktionskanal (14; 15) aufweist,
**dass** zumindest temporär wenigstens eine interaktive Funktionalität, insbesondere eine Verlinkung (20) zu wenigstens einer weiteren Übertragungsebene (17; 18), vorgesehen ist und
**dass** über eine Aktivierung der interaktiven Funktionalität eine Verzweigung von der ersten Übertragungsebene (16) in wenigstens eine weitere Übertragungsebene (17; 18) herbeiführbar ist.

22. Hybrides Netzwerk nach Anspruch 21, **dadurch gekennzeichnet, dass** dieses Mittel zur Durchführung des Verfahrens nach einem der Ansprüche 1 bis 20 aufweist.
